# EUROPÄISCHE PATENTANMELDUNG

(11) **EP 3 653 901 A1**
(43) Veröffentlichungstag der Anmeldung: **20.05.2020**
(21) Anmeldenummer: 19208419.2
(22) Anmeldetag: 12.11.2019
(51) Int. Cl.: F16D 55/226, F16D 65/00, F16D 65/18, B62L 3/02, B60T 8/34, B60T 8/46, B60T 7/08, B60T 11/34, B60T 8/32

(54) **BREMSSATTEL EINES ZWEIRADS**

(30) Priorität: 15.11.2018 DE 102018219479
(71) Anmelder: Robert Bosch GmbH, 70442 Stuttgart (DE)
(72) Erfinder: Moia, Alessandro, 71088 Holzgerlingen (DE)

(57) **Zusammenfassung**

Die vorliegende Erfindung betrifft einen Bremssattel (1) eines Zweirads (10), aufweisend einen Anschluss (6) für eine ein Bremsfluid führende Bremsleitung (5), zumindest einen Bremsbelag (2), der durch einen Fluiddruck des Bremsfluid auf eine Bremsscheibe (12) pressbar ist, ein erstes Ventil (3), mit dem die Verbindung zwischen Bremssattel (1) und einer Bremsleitung (5) trennbar und freigebbar ist, und ein zweites Ventil (4), um das Bremsfluid an eine Umgebung abzulassen.

## Beschreibung

### Stand der Technik

Die vorliegende Erfindung betrifft einen Bremssattel eines Zweirads. Außerdem betrifft die Erfindung ein Bremssystem eines Zweirads. Des Weiteren betrifft die Erfindung ein Zweirad, wobei das Zweirad insbesondere ein Fahrrad ist. Schließlich betrifft die Erfindung ein Verfahren zum Ansteuern eines Bremssattels.

Aus dem Stand der Technik sind pumpenlose Konzepte bekannt, das Blockieren von gebremsten Rädern bei Fahrrädern zu verhindern. Insbesondere kennt der Stand der Technik geschlossene Systeme, die ein Einlassventil, ein Auslassventil und eine Speicherkammer aufweisen, die den Bremsdruck in der Bremsleitung und damit das Bremsmoment modulieren. Bei geschlossenem System verbleibt die Bremsflüssigkeit dabei während des gesamten Bremsvorgangs von der Umgebung getrennt. Bspw. sind solche geschlossenen Systeme in der DE 10 2005 043 725 A1, der DE 10 2010 001 542 A1, der WO2014/108234 A1, der DE 10 158 382 A1 sowie der WO2016/174531 A1 bekannt.

Zusätzlich sind pumpenlose Systeme ohne Speicherkammer bekannt, die ein Einlassventil und ein Auslassventil aufweisen, durch die das Bremsmoment moduliert werden kann, indem ein Bremsdruck in dem Bremsflüssigkeitsreservoir abgebaut wird. Solche Systeme werden auch offene Systeme genannt, da die Bremsflüssigkeit ins Reservoir mit Umgebungsdruck abgebaut wird. Beispielsweise sind solche Systeme aus der US 2007/278853 A oder der US 4 141 597 A bekannt. Grundsätzlich sind Bremssysteme im Stand der Technik ausgelegt, möglichst wenig Bremsflüssigkeit an die Umgebung abzugeben.

### Offenbarung der Erfindung

Der erfindungsgemäße Bremssattel ermöglicht das Bereitstellen einer Funktion zum Vermeiden eines Stillstands eines gebremsten Rads, insbesondere eines Zweirads. Dabei ermöglicht der Bremssattel ein kostengünstiges System mit wenig benötigtem Bauraum zu reduzieren, durch das insbesondere ein Stillstand des gebremsten Rads eines Fahrrads vermeidbar ist. Der Bremssattel benötigt insbesondere keine Speicherkammer wie geschlossene Systeme, wodurch eine bauraumaufwendige Komponente vermieden ist. Außerdem kann das Bremsfluid unmittelbar an die Umgebung abgegeben werden, wodurch insbesondere keine Rückflussleitung notwendig ist, die den Bremssattel mit einem Reservoir verbindet. Da die gesamte Funktionalität des Verhinderns des Stillstands des Rads beim Bremsen in den Bremssattel integriert ist, kann außerdem aufgrund einer sehr hohen Steifigkeit des Bremssattels im Vergleich zu dem gesamten Bremssystem mit einem geringen Bremsfluid-Verlust eine effektive Wirkung erzielt werden.

Der Bremssattel eines Zweirads weist vorteilhafterweise einen Anschluss auf, an dem eine Bremsleitung anschließbar ist. Die Bremsleitung führt ein Bremsfluid und kann somit das Bremsfluid an den Bremssattel übertragen. Insbesondere kann in der Bremsleitung das Bremsfluid einen Fluiddruck aufweisen, der zum Bremsen benötigt wird. Liegt dieser Fluiddruck in der Bremsleitung an, so erfolgt ein Übertragen des Fluiddrucks an den Bremssattel. Der Bremssattel weist zumindest einen Bremsbelag auf, der durch den Fluiddruck des Bremsfluids auf eine Bremsscheibe pressbar ist. Auf diese Weise lässt sich vorteilhafterweise eine Bremsung erreichen. Weiterhin ist vorgesehen, dass der Bremssattel ein erstes Ventil sowie ein zweites Ventil aufweist. Das erste Ventil ist vorgesehen, um eine Verbindung zwischen Bremssattel und Bremsleitung zu trennen und freizugeben. Somit kann insbesondere durch das erste Ventil der Bremssattel von dem Fluiddruck in der Bremsleitung entkoppelt werden. Das zweite Ventil dient zum Ablassen des Bremsfluids an eine Umgebung. Insbesondere ist vorgesehen, dass das erste Ventil geschlossen werden kann, um anschließend das zweite Ventil zu öffnen. Auf diese Weise lässt sich Bremsfluid innerhalb des Bremssattels an die Umgebung abgeben, wodurch eine Bremskraft, die von dem Bremsbelag auf die Bremsscheibe ausgeübt wird, verringern. Dies wird insbesondere dadurch erreicht, dass der Bremsbelag durch den verringerten Druck innerhalb des Bremssattels mit geringerer Kraft auf die Bremsscheibe gepresst wird. Das zweite Ventil ist vorteilhafterweise weder mit einem Reservoir, noch mit einer Speicherkammer verbunden, sondern gibt das Bremsfluid unmittelbar an eine Umgebung ab. Somit ist ein einfaches und kostengünstiges System realisiert.

Die Unteransprüche haben bevorzugte Weiterbildungen der Erfindung zum Inhalt.

Bevorzugt ist vorgesehen, dass ein Rückschlagventil parallel zu dem ersten Ventil angeordnet ist. Das Rückschlagventil ermöglicht unabhängig von dem ersten Ventil einen Fluidfluss von dem Bremssattel in die Bremsleitung und verhindert einen Fluidfluss von der Bremsleitung zu dem Bremssattel. Somit ist insbesondere sichergestellt, dass ein Beenden eines Bremswunsches durch einen Benutzer unmittelbar umgesetzt wird. Üblicherweise muss ein Benutzer einen Bremsaktuator, beispielsweise einen Hebel betätigen, um den Fluiddruck in der Bremsleitung aufzubauen. Ist das erste Ventil geschlossen, so ist der Fluiddruck innerhalb des Bremssattels von dem Fluiddruck in der Bremsleitung getrennt. Beendet der Benutzer das Betätigen des Bremsaktuators, so sinkt der Druck in der Bremsleitung ab, aufgrund des ersten geschlossenen Ventils bleibt der Fluiddruck innerhalb des Bremssattels unverändert. Aufgrund des Rückschlagventils erfolgt in einem solchen Fall ebenfalls ein Abbau des Fluiddrucks innerhalb des Bremssattels. Ansonsten hat das Rückschlagventil insbesondere keine Auswirkungen.

Vorteilhafterweise ist das erste Ventil federbelastet und ist ohne Ansteuerung in einer geöffneten Stellung vorgesehen. Somit kann durch einen Bremsaktuator jederzeit der Fluiddruck auf den Bremssattel übertragen werden. Dies bedeutet, dass jederzeit eine Bremsung ermöglicht ist. Erst wenn das Blockieren bzw. der Stillstand des gebremsten Rads verhindert werden soll, erfolgt ein Schließen des ersten Ventils.

Vorteilhafterweise ist außerdem vorgesehen, dass das zweite Ventil federbelastet ist und ohne Ansteuerung in einer geschlossenen Stellung verbleibt. Somit ist sichergestellt, dass das Bremsfluid in einem Normalzustand innerhalb des Bremssattels verbleibt. Es ist insbesondere vorgesehen, dass das Bremsfluid nur dann aus dem Bremssattel abgelassen wird, wenn dies zur Reduzierung der Bremskraft, das heißt derjenigen Kraft, mit der der Bremsbelag auf die Bremsscheibe gepresst wird, reduziert werden soll. Insbesondere ist somit sichergestellt, dass ein normales Bremsen jederzeit ermöglicht ist.

Vorteilhafterweise handelt es sich bei dem Bremsfluid um ein biologisch abbaubares Fluid. Dies ist insbesondere vorteilhaft, da das Bremsfluid an die Umgebung abgelassen wird. Somit ist eine Belastung der Umgebung durch das abgelassene Bremsfluid vermieden.

Besonders vorteilhaft handelt es sich bei dem Bremsfluid um Wasser. Insbesondere kann es sich auch um ein Wasser-Frostschutz-Gemisch aufweisen. Dies hat insbesondere den Vorteil, dass ein leichtes Nachfüllen des Bremsfluids ermöglicht ist, was besonders dann gilt, wenn als Bremsfluid reines Wasser verwendet wird. Somit ist insbesondere ermöglicht, nach einem intensiven Benutzen der Funktionalität zur Vermeidung eines Stillstands des gebremsten Rads, das dafür notwendigerweise abgelassene Bremsfluid wieder nachzufüllen. Ist ein Wasser-Frostschutz-Gemisch verwendet, so kann der Bremssattel vorteilhafterweise auch bei niedrigen Temperaturen verwendet werden, ohne dass mit einem Ausfall der Bremsfunktion zu rechnen ist.

Die Erfindung betrifft vorteilhafterweise außerdem ein Bremssystem. Das Bremssystem ist insbesondere für ein Zweirad vorgesehen. Bei dem Zweirad handelt es sich bevorzugt um ein Fahrrad. Das Bremssystem weist einen Bremsaktuator auf, der vorteilhafterweise ein Bremshebel ist. Über den Bremsaktuator ist von einem Benutzer ein Fluidruck des Bremsfluids generierbar, wobei der Bremsaktuator über eine Bremsleitung mit einem Bremssattel wie zuvor beschrieben, verbunden ist. Bringt ein Benutzer auf den Bremsaktuator, insbesondere auf den Bremshebel, eine Kraft auf, so wird durch den Bremsaktuator ein Fluiddruck in der Bremsleitung und damit auch in dem Bremssattel generiert. Dies führt dazu, dass die Bremsscheiben des Bremssattels an eine Bremsscheibe angepresst werden können, wodurch ein Bremsen ermöglicht ist. Sollte die Gefahr eines Stillstands des gebremsten Rads bestehen, so ermöglicht das Bremssystem über den Bremssattel den Fluiddruck innerhalb des Bremssattels und damit die Bremsleistung zu reduzieren, wodurch das gebremste Rad entweder wieder in Rotation versetzt werden kann oder ein noch nicht eingetretener, aber drohender Stillstand des gebremsten Rads verhindert werden kann. Dies erfolgt insbesondere durch Schließen des ersten Ventils und Öffnen des zweiten Ventils. Sobald diese Funktion nicht mehr benötigt wird, kann das zweite Ventil geschlossen bleiben und das erste Ventil geöffnet werden. In diesem Fall ist vorgesehen, dass entweder der Benutzer den Bremsaktuator erneut aktuieren muss, um zu dem ursprünglichen Fluiddruck zu gelangen oder alternativ eine Ausgleichsleitung zwischen einem Reservoir und dem Bremsaktuator vorhanden ist, um bei gleicher Aktuierung des Bremsaktuators wiederum den ursprünglich vorhandenen Bremsdruck herzustellen.

Besonders vorteilhaft weist das Bremssystem einen Vorratstank auf, der im Rahmen dieser Anmeldung auch als Reservoir beschrieben ist. Der Vorratstank ist bevorzugt unmittelbar an dem Bremsaktuator angeordnet. Besonders bevorzugt ist vorgesehen, dass der Vorratstank ein Fassungsvermögen von zumindest 2 ml, insbesondere von zumindest 5 ml aufweist. Auf diese Weise ist sichergestellt, dass ausreichend Bremsfluid zur Verfügung steht, das durch den Bremssattel zum Vermeiden eines Stillstands des gebremsten Rads abgelassen werden kann. So ist insbesondere vorgesehen, dass durch das Aktuieren des Bremsaktuators in etwa 0,3 ml Bremsfluid verdrängt werden, wodurch sich ein Fluiddruck von etwa 100 bar an dem Bremssattel aufbauen lässt. Allerdings ist hierbei zu berücksichtigen, dass das gesamte Bremssystem aufgrund des Vorhandenseins von Bremsaktuator, Bremsleitung und Verbindungsstellen zwischen Bremsaktuator, Bremsleitung und Bremssattel Steifigkeit aufweist, die von der Steifigkeit des Bremssattels allein abweicht. Daher kann nach Schließen des ersten Ventils der Fluiddruck von 100 bar innerhalb des Bremssattels mit erheblich weniger Menge an Bremsfluid abgebaut werden. So ist insbesondere lediglich das Ablassen von 0,1 ml Bremsfluid aus dem Bremssattel vorgesehen, um die gesamten 100 bar Fluiddruck abzubauen. Insbesondere wird das zweite Ventil zum Abbauen des Fluiddrucks wiederholt für einen kurzen Zeitraum geöffnet, wobei pro Zyklus üblicherweise weniger als 100 bar Fluiddruck abgebaut werden. Insbesondere ist ermöglicht, dass das Bremssystem eine Bremsung mit vier Zyklen mit etwa 0,2 ml Verlust an Bremsfluid realisieren kann. Durch das zuvor beschriebene Fassungsvermögen des Vorratstanks ist insbesondere erreicht, dass eine hohe Anzahl von Bremsungen mit reduzierbarem Fluiddruck innerhalb des Bremssattels durchgeführt werden kann, bevor das Bremsfluid erschöpft ist.

Besonders vorteilhaft weist der Vorratstank einen Füllstandsensor auf. Anhand des Füllstandsensors ist ein aktueller Füllstand des Vorratstanks erfassbar. Es ist weiterhin vorgesehen, dass unterhalb eines vordefinierten Füllstands ein Öffnen des zweiten Ventils verhinderbar ist. Auf diese Weise ist sichergestellt, dass keine weitere Reduktion der Menge des Bremsfluids vorgenommen wird, um einen Ausfall des Bremssystems aufgrund mangelnden Bremsfluids zu vermeiden. Allerdings ist weiterhin eine normale Bremsung ermöglicht. Besonders vorteilhaft ist außerdem bei Unterschreiten des vordefinierten Füllstands eine Warnung an einen Benutzer ausgebbar, die den Benutzer darauf hinweist, den Vorratstank aufzufüllen.

Die Erfindung betrifft außerdem ein Zweirad, das insbesondere ein Fahrrad ist. Das Zweirad umfasst ein Bremssystem wie zuvor beschrieben. Außerdem umfasst das Zweirad ein Rad, an dem eine Bremsscheibe angebracht ist. Die Bremsscheibe ist durch den Bremssattel des Bremssystems bremsbar, indem der zumindest eine Bremsbelag des Bremssattels an besagte Bremsscheibe anlegbar ist. Somit ist insbesondere ein Bremsen des Zweirads komfortabler ausgestaltet, da die Gefahr eines Überschlags verringert ist.

Die Erfindung betrifft außerdem ein Verfahren zum Ansteuern eines Bremssattels wie zuvor beschrieben. Das Verfahren umfasst die Schritte des Schließens des ersten Ventils und des anschließenden Öffnens des zweiten Ventils. Dabei wird das zweite Ventil über einen vordefinierten Zeitraum geöffnet, um Bremsfluid aus dem Bremssattel abzulassen. Dadurch ist der Fluiddruck innerhalb des Bremssattels reduzierbar. Besonders vorteilhaft erfolgt das Öffnen des zweiten Ventils über den vordefinierten Zeitraum wiederholend. Somit lassen sich mehrere Zyklen realisieren, wobei bei jedem Zyklus eine gewisse Menge an Bremsfluid abgelassen wird. Pro Zyklus ist somit der Fluiddruck um einen vordefinierten Wert absenkbar.

Besonders vorteilhaft werden die Schritte des Schließens des ersten Ventils und Öffnen des zweiten Ventils als Reaktion auf einen festgestellten Stillstand eines mit dem Bremssattel gebremsten Rads ausgeführt. Dabei ist vorgesehen, dass das Öffnen des zweiten Ventils über den vordefinierten Zeitraum so lange wiederholt erfolgt, bis kein Stillstand des gebremsten Rads mehr vorhanden ist. Somit ist erreichbar, dass ein stillstehendes Rad während des Bremsvorgangs wieder in Rotation versetzt werden kann, um den Bremsvorgang für den Benutzer komfortabler zu gestalten.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Zweirads gemäß einem Ausführungsbeispiel der Erfindung, und
- Figur 2: eine schematische Ansicht eines Bremssystems gemäß einem Ausführungsbeispiel der Erfindung.

### Ausführungsform der Erfindung

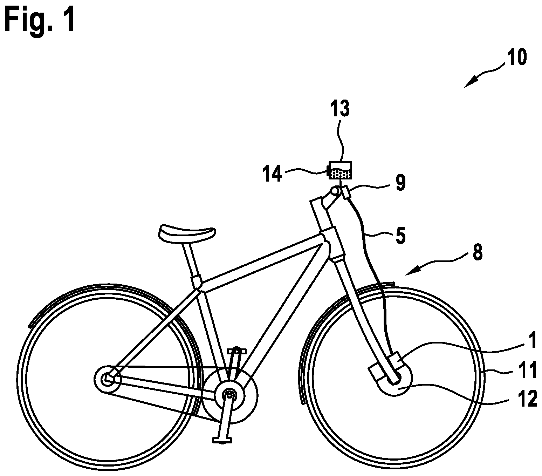

Figur 1 zeigt schematisch ein Zweirad 10 gemäß einem bevorzugten Ausführungsbeispiel der Erfindung, das insbesondere ein Fahrrad ist. Das Zweirad 10 umfasst ein Bremssystem 8 gemäß einem Ausführungsbeispiel der Erfindung. Das Bremssystem 8 wiederum umfasst einen Bremsaktuator 9, der insbesondere ein Bremshebel ist. Der Bremsaktuator 9 ist über eine Bremsleitung 5 mit einer Bremssattel 1 gekoppelt, um eine Bremsscheibe 12 eines Rads 11 des Zweirads 10 zu bremsen. Dazu ist vorgesehen, dass mittels des Bremsaktuators 9 ein Bremsfluid verdrängt wird, wodurch ein Fluiddruck innerhalb der Bremsleitung 5 und innerhalb des Bremssattels 1 generierbar ist. Das Bremsfluid wird von einem Vorratstank 13 bereitgestellt, der unmittelbar an dem Bremsaktuator 9 angebracht ist. Der Vorratstank 13 weist einen Füllstandsensor 14 auf, um einen Füllstand des Vorratstanks 13 zu ermitteln.

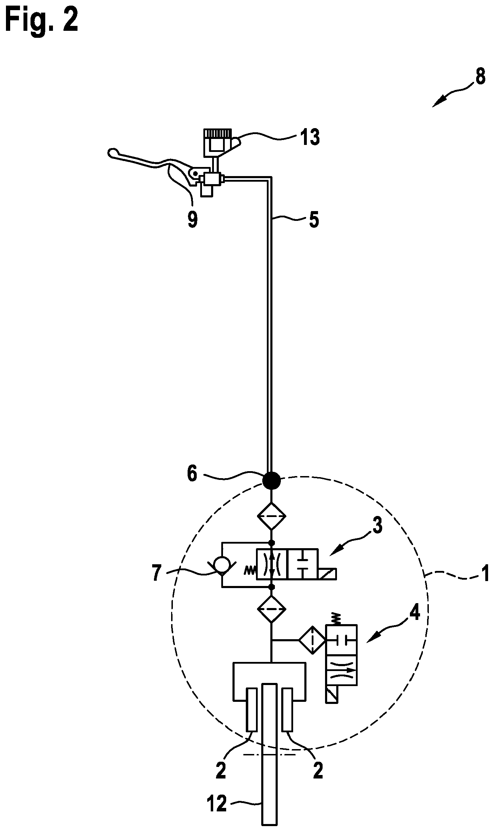

Figur 2 zeigt schematisch eine Detailansicht des Bremssystems 8 gemäß einem Ausführungsbeispiel der Erfindung. In diesem Ausführungsbeispiel ist der Bremsaktuator 9 als Bremshebel realisiert. Wird der Bremsaktuator 9 von einem Benutzer betätigt, so werden in etwa 0,3 ml Bremsfluid verdrängt, wodurch innerhalb der Bremsleitung 5 und innerhalb des Bremssattels 1 ein Fluiddruck von etwa 100 bar entsteht. Anhand dieses Fluiddrucks können Bremsbeläge 2 des Bremssattels 1 an die Bremsscheibe 12 des Rads 11 angepresst werden, um dadurch das Rad 11 zu bremsen.

Bringt der Benutzer eine zu große Bremskraft auf, das heißt, verdrängt der Benutzer durch den Bremsaktuator 9 eine zu große Menge an Bremsfluid, so besteht die Möglichkeit, dass die Bremsscheibe 12 und damit das Rad 11 durch die Bremsbelege 2 derart abgebremst werden, dass das Rad 11 in einen Stillstand gelangt. Dies ist für den Benutzer unkomfortabel, da insbesondere die Möglichkeit eines Überschlags besteht. Der Bremssattel 1 ist daher ausgelegt, in einem solchen Fall den Fluiddruck innerhalb des Bremssattels 1 zu reduzieren und dadurch die Bremskraft zu verringern, wodurch die Bremsscheibe 12 und damit das Rad 11 wieder in Rotation versetzt werden können.

Der Bremssattel 1 weist einen Anschluss 6 auf, über den der Bremssattel 1 an die Bremsleitung 5 anschließbar ist. Somit ist das Bremsfluid an den Bremssattel 1 übertragbar. Der Bremssattel 1 weist des Weiteren ein erstes Ventil 3 und ein zweites Ventil 4 auf. Das erste Ventil 3 dient zum Verbinden und Trennen des Bremssattels 1 mit der Bremsleitung 5. Insbesondere ist das erste Ventil 3, ebenso wie das zweite Ventil 4, zwischen den Bremsbelägen 2 und dem Anschluss 6 angeordnet. Das erste Ventil 3 ist dabei benachbart zu dem Anschluss 6, das zweite Ventil 4 benachbart zu den Bremsbelägen 2 angeordnet.

Das zweite Ventil 4 dient zum wahlweisen Ablassen von Bremsfluid aus dem Bremssattel 1 an eine Umgebung. Insbesondere wird das abgelassene Bremsfluid nicht weiter aufgefangen, sondern wird unmittelbar an die Umgebung abgegeben.

Das erste Ventil 3 ist federbelastet und ist ohne externe Ansteuerung derart geschaltet, dass dieses offen ist. Somit kann durch Aufbringen eines Fluiddrucks mittels des Bremsaktuators 9 eine Bremsung erreicht werden, da die Bremsbeläge 2 an die Bremsscheibe 12 angepresst werden. Gleichzeitig ist das zweite Ventil 4 federbelastet ausgebildet und ohne externe Ansteuerung in der geschlossenen Stellung vorgesehen. Somit ist der Bremssattel 1 geschlossen und kann kein Bremsfluid an die Umgebung abgeben. Soll jedoch die Bremskraft reduziert werden, so ist der Fluiddruck innerhalb des Bremssattels 1 zu reduzieren. Die ist insbesondere daher vorteilhaft, da zum Abbauen des zuvor beschriebenen Fluiddrucks von 100 bar lediglich etwa 0,1 ml Bremsfluid aus dem Bremssattel abgelassen werden müssen. Hierzu wird das erste Ventil geschlossen, wodurch der Bremssattel 1 von der Bremsleitung 5 getrennt ist. Weiterhin ist vorgesehen, dass das zweite Ventil 4 wiederholend für einen vordefinierten Zeitraum geöffnet wird, um mit jedem Öffnen einen vordefinierten Betrag an Bremsfluid aus dem Bremssattel 1 abzulassen. Somit erfolgt mit jedem Zyklus, den das zweite Ventil 4 geöffnet wird, eine Reduktion des Fluiddrucks innerhalb des Bremssattels 1, wodurch die Anpresskraft der Bremsbelege 2 an die Bremsscheibe 12 reduziert wird. Auf diese Weise lässt sich erreichen, dass die Bremsscheibe 12 und damit das Rad 11 wieder in Rotation gelangen. Insbesondere ist vorgesehen, dass pro Zyklus weniger als die zuvor beschriebenen 100 bar abgebaut werden. Somit kann insbesondere eine Bremsung mit 4 Zyklen realisiert werden, bei der insgesamt etwa 0,2 ml Bremsfluid angelassen werden.

Vorteilhaferweise ist parallel zu dem ersten Ventil 3 ein Rückschlagventil 7 angeordnet. Das Rückschlagventil 7 ermöglicht, unabhängig von dem ersten Ventil 3, einen Fluidfluss von dem Bremssattel, insbesondere von den Bremsbelägen 2, zu der Bremsleitung 5. Die umgekehrte Richtung ist hingegen blockiert. Somit kann unmittelbar auf das Nachlassen des Fluiddrucks in der Bremsleitung 5 reagiert werden, da das Nachlassen des Fluiddrucks in der Bremsleitung 5 unmittelbar zu einem Abbau des Bremsdrucks innerhalb des Bremssattels 1 führt, selbst wenn das erste Ventil 3 geschlossen ist und der Fluiddruck innerhalb des Bremssattels 1 höher wäre als in der Bremsleitung 5. Dies bedeutet, dass innerhalb des Bremssattels 5 niemals ein höherer Druck vorherrschen kann, als in der Bremsleitung 5. Dies bedeutet, dass einem Wunsch der Beendigung der Bremsung durch den Benutzer, bspw. durch Beendigung des Aktuierens des Bremsaktuators 9, sofort Rechnung getragen wird.

Bei dem Bremsfluid handelt es sich bevorzugt um Wasser, insbesondere um ein Wasser-Frostschutzmittel-Gemisch. Über den zuvor beschriebenen Füllstandsensor lässt sich feststellen, welche Restmenge an Bremsfluid innerhalb des Vorratstanks 13 vorhanden ist. Handelt es sich bei dem Bremsfluid um reines Wasser, so ist ein Nachfüllen des Bremsfluids in den Vorratstank 13 einfach und jederzeit möglich. Dabei ist vorgesehen, dass der Vorratstank 13 eine Kapazität von zumindest 2 ml, insbesondere von zumindest 5 ml aufweist, um eine ausreichende Möglichkeit des Ablassens von Bremsfluid zu erreichen. Sinkt hingegen der Füllstand innerhalb des Vorratstanks 13 unter einen vordefinierten Wert ab, so wird insbesondere ein Öffnen des zweiten Ventils 4 verhindert. Damit ist kein weiteres Ablassen des Bremsfluids möglich, wodurch keine weitere Verringerung des Füllstands des Bremsfluids erfolgt. Somit ist stets sichergestellt, dass eine normale Bremsfunktionalität erhalten bleibt.

Durch die Verwendung von Wasser als Bremsfluid kann das Bremsfluid optimal an die Umgebung abgelassen werden. Selbst bei Verwendung eines Wasser-Frostschutzmittel-Gemischs ist erreicht, dass keine oder lediglich minimale Umweltauswirkungen vorhanden sind.

Besonders vorteilhaft ist ein Steuergerät vorhanden, das einen Stillstand des Rads 11 während einer Bremsung erkennt. Sobald dies der Fall ist, erfolgt ein Schließen des ersten Ventils 3 und ein wiederholtes Öffnen des zweiten Ventils 4, um den Fluiddruck innerhalb des Bremssattels 1 zu reduzieren. Dies erfolgt insbesondere so lange, bis erkannt wird, dass das Rad 11 in Rotation gerät, sodass der Stillstand beendet ist.

Aufgrund einer Realisierung dieser Funktionalität ausschließlich in dem Bremssattel 1 kann das Bremssystem 8 sehr einfach, kostengünstig und platzsparend aufgebaut werden. Dennoch ist ein komfortables Bremsen ermöglicht, insbesondere lässt sich die Möglichkeit eines Überschlags minimieren.

## Patentansprüche

1. Bremssattel (1) eines Zweirads (10), aufweisend
• einen Anschluss (6) für eine ein Bremsfluid führende Bremsleitung (5),
• zumindest einen Bremsbelag (2), der durch einen Fluiddruck des Bremsfluid auf eine Bremsscheibe (12) pressbar ist,
• ein erstes Ventil (3), mit dem die Verbindung zwischen Bremssattel (1) und einer Bremsleitung (5) trennbar und freigebbar ist, und
• ein zweites Ventil (4), um das Bremsfluid an eine Umgebung abzulassen.

2. Bremssattel (1) nach Anspruch 1, **dadurch gekennzeichnet, dass** ein Rückschlagventil (7) parallel zu dem ersten Ventil (3) angeordnet ist, wobei das Rückschlagventil (7) unabhängig von dem ersten Ventil (3) einen Fluidfluss von dem Bremssattel (1) in die Bremsleitung (5) ermöglicht und einen Fluidfluss von der Bremsleitung (5) zu dem Bremssattel (1) verhindert.

3. Bremssattel (1) nach einem der vorhergehenden Ansprüche, **dadurch gekennzeichnet, dass** das erste Ventil (3) federbelastet ist und ohne Ansteuerung in einer geöffneten Stellung verbleibt.

4. Bremssattel (1) nach einem der vorhergehenden Ansprüche, **dadurch gekennzeichnet, dass** das zweite Ventil (4) federbelastet ist und ohne Ansteuerung in einer geschlossenen Stellung verbleibt.

5. Bremssattel (1) nach einem der vorhergehenden Ansprüche, **dadurch gekennzeichnet, dass** das Bremsfluid ein biologisch abbaubares Fluid ist.

6. Bremssattel (1) nach einem der vorhergehenden Ansprüche, **dadurch gekennzeichnet, dass** das Bremsfluid Wasser, insbesondere ein Wasser-Frostschutz-Gemisch, aufweist.

7. Bremssystem (8) eines Zweirads (10), aufweisend einen Bremsaktuator (9) zum Generieren des Fluiddrucks des Bremsfluids, einen Bremssattel (1) nach einem der vorhergehenden Ansprüche, sowie eine Bremsleitung (5) zum Verbinden von Bremssattel (1) und Bremsaktuator (9).

8. Bremssystem (8) nach Anspruch 7, **gekennzeichnet durch** einen Vorratstank (13) zur Aufnahme des Bremsfluids, wobei der Vorratstank (13) unmittelbar an dem Bremsaktuator (9) angeordnet ist, wobei der Vorratstank (13) bevorzugt ein Fassungsvermögen von zumindest 2 ml, insbesondere von zumindest 5 ml aufweist.

9. Bremssystem (8) nach Anspruch 8, **dadurch gekennzeichnet, dass** der Vorratstank (13) einen Füllstandsensor (14) zum Erfassen eines Füllstands des Vorratstanks (13) aufweist, wobei unterhalb eines vordefinierten Füllstands ein Öffnen des zweiten Ventils (4) verhinderbar ist.

10. Zweirad (10) umfassend ein Bremssystem (8) nach einem der Ansprüche 7 bis 9 sowie ein Rad (11), an dem eine Bremsscheibe (12) angebracht ist, wobei die Bremsscheibe (12) durch den Bremssattel (1) bremsbar ist.

11. Verfahren zum Ansteuern eines Bremssattels (1) nach einem der Ansprüche 1 bis 6, **gekennzeichnet durch** die Schritte: Schließen des ersten Ventils (3) und anschließendes, insbesondere wiederholtes, Öffnen des zweiten Ventils (4) über einen vordefinierten Zeitraum zum Ablassen von Bremsfluid aus dem Bremssattel (1) zur Reduktion des Fluiddrucks.

12. Verfahren nach Anspruch 11, **dadurch gekennzeichnet, dass** das Schließen des ersten Ventils (3) und Öffnen des zweiten Ventils (4) als Reaktion auf einen festgestellten Stillstand eines mit dem Bremssattel (1) gebremsten Rads (11) erfolgt, wobei das Öffnen des zweiten Ventils (4) über den vordefinierten Zeitraum bevorzugt solange wiederholt durchgeführt wird, bis kein Stillstand des gebremsten Rads (11) mehr vorhanden ist.
